Europäisches Patentamt

(19) European Patent Office

Office européen des brevets

(11) Numéro de publication: **0 040 114**
**B1**

(12) **FASCICULE DE BREVET EUROPEEN**

(45) Date de publication du fascicule du brevet:
03.10.84

(21) Numéro de dépôt: **81400591.4**

(22) Date de dépôt: **14.04.81**

(51) Int. Cl.³: **G 03 H 1/00, G 01 S 17/88**

(54) **Système optique d'observation en temps réél à balayage.**

(30) Priorité: **08.05.80 FR 8010245**

(43) Date de publication de la demande:
**18.11.81 Bulletin 81/46**

(45) Mention de la délivrance du brevet:
**03.10.84 Bulletin 84/40**

(84) Etats contractants désignés:
**BE DE GB IT NL**

(56) Documents cités:
**US - A - 4 193 088**
**US - A - 4 198 162**

**PROCEEDINGS OF THE INTERNATIONAL CONFERENCE ON LASERS 78, Décembre 11-15, 1978. Ed. STS Press, McLean, VA, US, Orlando, US, T.O'MEARA: "Applications of nonlinear phase conjugation on compensated active imaging",pages 542-553**
**OPTICS LETTERS, vol. 4, no. 1, janvier 1979, New York, US, J. HUIGNARD et al.: "Phase-conjugate wavefront generation via real-time holography in Bi12 SiO20 crystals",pages 21-23**
**IBM TECHNICAL DISCLOSURE BULLETIN, vol. 22, no. 9, février 1980, New York, US, G. SINCERBOX: "Regenerative information storage and display using phase conjugation", pages 4173-4174**

(73) Titulaire: **THOMSON-CSF, 173, Boulevard Haussmann, F-75379 Paris Cedex 08 (FR)**

(72) Inventeur: **Huignard, Jean-Pierre, THOMSON-CSF SCPI 173, bld Haussmann, F-75360 Paris Cedex 08 (FR)**
Inventeur: **Malard, Marcel, THOMSON-CSF SCPI 173, bld Haussmann, F-75360 Paris Cedex 08 (FR)**

(74) Mandataire: **Lepercque, Jean et al, THOMSON-CSF SCPI 173, Bld Haussmann, F-75379 Paris Cedex 08 (FR)**

# Description

L'invention se rapporte au domaine de la détection optique et de la formation d'image d'objets étendus, et concerne plus spécialement un système optique d'observation en temps réel, mettant à profit, pour amplifier le signal à détecter, la possibilité qu'ont certains milieux de générer en temps réel un front d'onde complexe.

L'invention a pour but d'améliorer la détection et l'imagerie d'objets étendus et/ou éloignés.

Les dispositifs d'observation et de détection connus comprennent généralement une source lumineuse permettant d'éclairer l'objet à détecter par l'intermédiaire d'un dispositif d'éclairement envoyant sur l'objet l'énergie rayonnée par la source. L'objet éclairé renvoie au moins une partie du rayonnement reçu vers un dispositif de détection comprenant, entre autre, une optique collectrice destinée à former une image de l'objet éclairé sur un détecteur, support photosensible, photodétecteur, mosaïque de photodétecteurs, vidicon...

Il est connu d'augmenter la sensibilité du système en concentrant le faisceau d'éclairement sur un point de l'objet et en faisant subir à ce faisceau, à l'aide d'un déviateur X–Y, un balayage tel qu'il éclaire successivement tous les points de l'objet. Dans ce cas, il est avantageux de recevoir le signal optique à détecter sur un photodétecteur couplé à un écran de visualisation type télévision, dont le balayage est synchrone du déviateur X–Y. On obtient alors sur l'écran une image bidimensionnelle de l'objet.

Pour détecter des objets éloignés, il est avantageux d'utiliser un rayonnement infrarouge, moins absorbé par le milieu ambiant que le rayonnement visible. L'inconvénient est que, dans ce domaine de longueurs d'onde, les détecteurs sont peu sensibles.

Un document de l'art connu, l'article IMB Technical Disclosure Bulletin, vol. 22, N° 9, de février 1980 décrit un dispositif dans lequel on fait interférer dans un milieu d'interaction 12 une onde objet et une onde de pompe cohérentes afin de créer dans ce milieu une modulation spatiale de l'indice de réfraction sous la forme de strates photoinduites. Ce réseau de strates diffracte une partie de l'onde de pompe dans la même direction et sous la même forme spatiale que l'onde objet: l'onde objet se trouve donc amplifiée.

De plus, la détection hétérodyne est une technique connue pour améliorer le rapport signal sur bruit (Proceedings of the International Conference on Laser 78, December 11–15, 1978, T. Oimeara, page 546, dernier paragraphe).

Dans le système d'observation selon l'invention, l'objet bi ou tridimensionnel à observer est éclairé, point par point, ou petite zone par petite zone, par balayage d'un faisceau d'éclairement sensiblement focalisé sur le plan moyen de l'objet. Le faisceau réémis à chaque instant est repris et envoyé sur un dispositif de détection qui, associé à un écran de visualisation permet d'obtenir finalement une image bidimensionnelle de l'objet.

Ce système comprend en outre un milieu d'interaction tel qu'il vient d'être décrit pour obtenir le renforcement du signal optique à détecter.

L'invention a pour objet un système optique d'observation en temps réel d'un objet comprenant une source de rayonnement cohérente, fournissant un faisceau concentré d'énergie rayonnante éclairant un objet, un faisceau de pompage et un milieu d'interaction, le faisceau issu de l'objet et le faisceau de pompage interférant dans ce milieu d'interaction dans lequel la modulation spatiale d'intensité lumineuse résultant des franges d'interférence induit une modulation spaciale de l'indice de réfraction, le réseau de strates ainsi photoinduites diffractant une fraction de l'onde de pompe sous la forme d'un front d'onde isomorphe de celui qui émane de l'objet, l'onde issue de l'objet se trouvant donc amplifiée, caractérisé en ce qu'il comprend en outre un dispositif déviateur qui assure le balayage de l'objet au moyen du faisceau concentré, le rayonnement issu de l'objet étant transmis par un retour inverse via le dispositif déviateur pour aller interférer dans ce milieu, des moyens optiques de détection hétérodyne du rayonnement émergeant de la zone éclairée de l'objet après traversée du milieu d'interaction, ces moyens comprenant un détecteur ponctuel, des moyens de visualisation d'une image de l'objet dont le balayage est en synchronisme avec le balayage de l'objet, ces moyens de visualisation étant reliés aux moyens de détection, et des moyens changeurs de fréquence disposés sur le trajet du faisceau de pompage.

L'invention sera mieux comprise à l'aide de la description qui suit, illustrée par les figures annexées dont le contenu est le suivant:

la fig. 1 est un schéma de principe du fonctionnement du milieu d'interaction mis en œuvre dans le système selon l'invention;

la fig. 2 est un diagramme montrant, en fonction du temps, l'établissement de l'onde réplique émergeant de ce milieu;

la fig. 3 est le schéma d'un exemple de réalisation du système;

les figs 4 et 5 sont des exemples de réalisation du système selon l'invention.

Le système selon l'invention met en œuvre la restitution d'un front d'onde de morphologie complexe, générée par l'interférence, dans un milieu d'interaction, d'une onde optique incidente ayant ce front d'onde avec une onde de pompe.

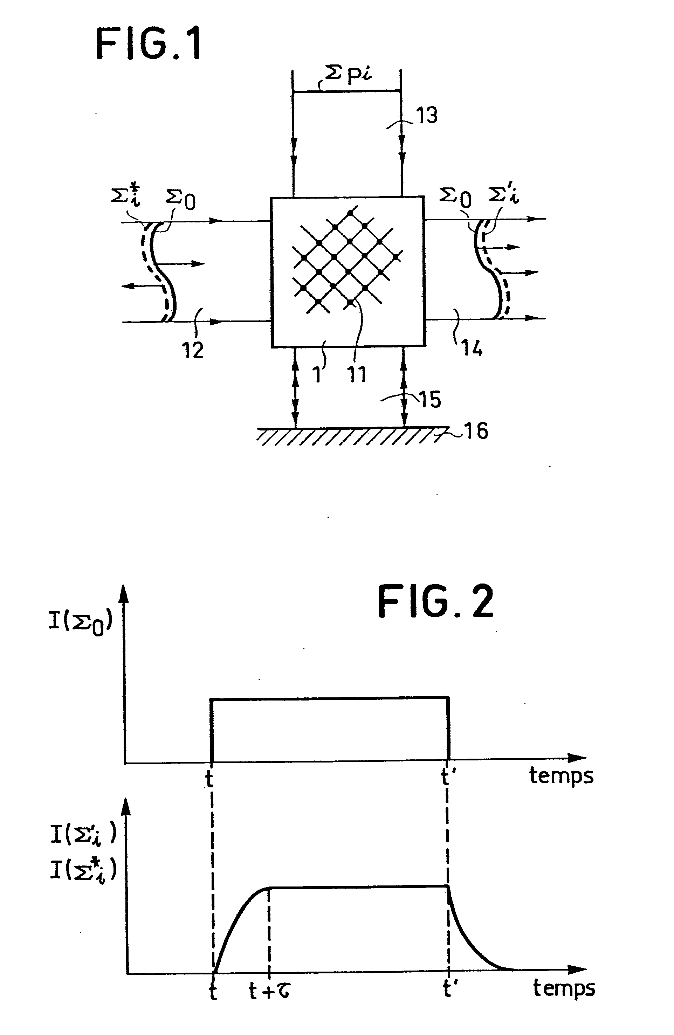

Cette interférence se produit dans un milieu à trois dimensions, schématisé en 1 sur la fig. 1, et dont les caractéristiques physiques et en particulier l'indice de réfraction, sont modulées spatialement par un réseau de franges 11 issu de l'interférence de l'onde optique incidente 12 de front d'onde $\Sigma_0$ et de l'onde de pompe 13, de front d'onde $\Sigma_{pi}$, plan par exemple. Du fait de l'existence de cette modulation spatiale qui induit par gradient un réseau de strates, une fraction de l'énergie de l'onde de pompage est diffractée sous la forme d'une onde émergente 14, de front d'onde $\Sigma'_i$, avec des caractéristiques isomorphes de celles de l'onde incidente, dont une partie émerge du milieu selon le front d'onde $\Sigma_0$, inchangé. L'onde $\Sigma'_i$ se propage dans le même sens que l'onde $\Sigma_0$, comme indiqué par les petites flèches associées à ces fronts d'onde, sur la fig. 1.

Une autre fraction de l'énergie de l'onde de pompe 13 traverse le milieu 1 et sort selon le faisceau 15. En interposant sur son trajet et normalement à celui-ci, un miroir réfléchissant 16, on renvoie cette onde 15 dans le milieu 1. Une partie de l'énergie est diffractée par le réseau de strates inscrit dans le milieu sous la forme d'une onde émergente de front d'onde complexe $\Sigma^*_i$, conjuguée de l'onde $\Sigma_0 \cdot \Sigma^*_i$ a des caractéristiques isomorphes de celles de $\Sigma_0$, mais suit sa trajectoire en sens inverse, comme indiqué par les petites flèches sur la fig. 1. $\Sigma_i^*$ retourne vers l'objet dont émane $\Sigma_0$.

La restitution de ces ondes $\Sigma'_i$ et $\Sigma^*_i$ s'effectue en temps réel, au temps $\tau$ d'établissement du réseau de strates près, comme représenté sur les diagrammes de la fig. 2. Si l'onde $\Sigma_0$ est établie dans le milieu 1 entre l'instant t et l'instant t', les ondes $\Sigma'_i$ et $\Sigma^*_i$ s'établissent avec une constante de temps $\tau$ et s'évanouissent pareillement.

Selon les matériaux constituant le milieu 1, la constante de temps $\tau$ varie de $10^{-3}$ à $10^{-12}$ secondes.

Ce phénomène de restitution en temps réel d'un front d'onde complexe à partir d'une onde de pompe plane est souvent désigné par «holographie dynamique» et le milieu 1 par support de «l'hologramme dynamique». Ce milieu est aussi désigné dans certains cas par milieu d'interaction non linéaire.

Des variations du réseau de franges peuvent être induites par des variations de l'onde incidente, dues par exemple à un balayage de l'objet, ou un décalage de fréquence entre l'onde incidente et l'onde de pompe, la condition de fonctionnement du dispositif est que ces variations soient lentes par rapport à la constante de temps $\tau$: il faut que le réseau de strates mobiles puisse effectivement s'établir dans le milieu d'interaction.

Dans le cas d'un décalage de fréquence entre l'onde objet et l'onde de pompe, en vue de faire une détection hétérodyne, il est intéressant de noter les fréquences des différentes ondes intervenant dans le système. Soit $\omega_0$ la fréquence de l'onde objet de front d'onde $\Sigma_0$, et $\omega_0$ et $\omega_1 = \omega_0 + \Delta\omega$, la fréquence des ondes de pompe de front d'onde $\Sigma_p$ et $\Sigma_{p1}$. Il sort dans ces conditions du milieu d'interaction, une onde réplique de front d'onde $\Sigma'_0$ et de fréquence $\omega_0 + \Delta\omega$; si un miroir rétroréflecteur est interposé, il existe également une onde conjuguée de front d'onde $\Sigma^*_0$ et de fréquence $\omega_0 + \Delta\omega$.

Il est important de noter également que l'énergie des ondes restituées $\Sigma'_0$ et $\Sigma^*_0$ prélevée par le réseau de strates sur l'onde de pompe peut être non négligeable par rapport à l'énergie de l'onde «incidente» $\Sigma_0$ arrivant dans le milieu 1.

Ces milieux permettant d'obtenir l'interaction mentionnée ci-dessus sont les suivants:

a) milieux transparents, liquides tels que cellule à sulfure de carbone, ou solides tels que plaquettes de germanium. Ces milieux sont utilisables pour les longueurs d'onde loin de la bande d'absorption, c'est-à-dire jusque vers 10 microns;

b) matériaux semi-conducteurs, tels que Si, CdTe, HgCdTe, ou milieux gazeux (vapeur de sodium), utilisés au voisinage de la bande d'absorption;

c) milieu laser lui-même, tel que laser YAG, RUBY ou $CO_2$, utilisable à la longueur d'onde propre du laser;

d) matériaux électro-optiques photoconducteurs tels que BSO (oxyde de bismuth et de silicium) ou BGO (oxyde de bismuth et de germanium).

Pour les trois premières catégories de matériaux, l'inscription de l'hologramme dynamique nécessite des densités de puissance élevées sur le faisceau pompe, de 10 $MWcm^{-2}$ à 1 $kWcm^{-2}$.

Pour la dernière catégorie, la modulation d'indice résulte de la présence simultanée d'un effet de charge d'espace et de l'effet électrooptique linéaire (effet photoréfractif). Les densités de puissances requises sont faibles, de 1 à 10 $mWcm^{-2}$, pour la longueur d'onde $\lambda = 0,5$ micron.

Dans le système d'observation selon l'invention, l'objet bi ou tridimensionnel à observer est éclairé, point par point, ou petite zone par petite zone, par balayage d'un faisceau d'éclairement sensiblement focalisé sur le plan moyen de l'objet. Le faisceau réémis à chaque instant est repris et envoyé sur un dispositif de détection qui, associé à un écran de visualisation permet d'obtenir finalement une image bidimensionnelle de l'objet. Ce système comprend en outre un milieu d'interaction tel qu'il vient d'être décrit pour obtenir le renforcement du signal à détecter.

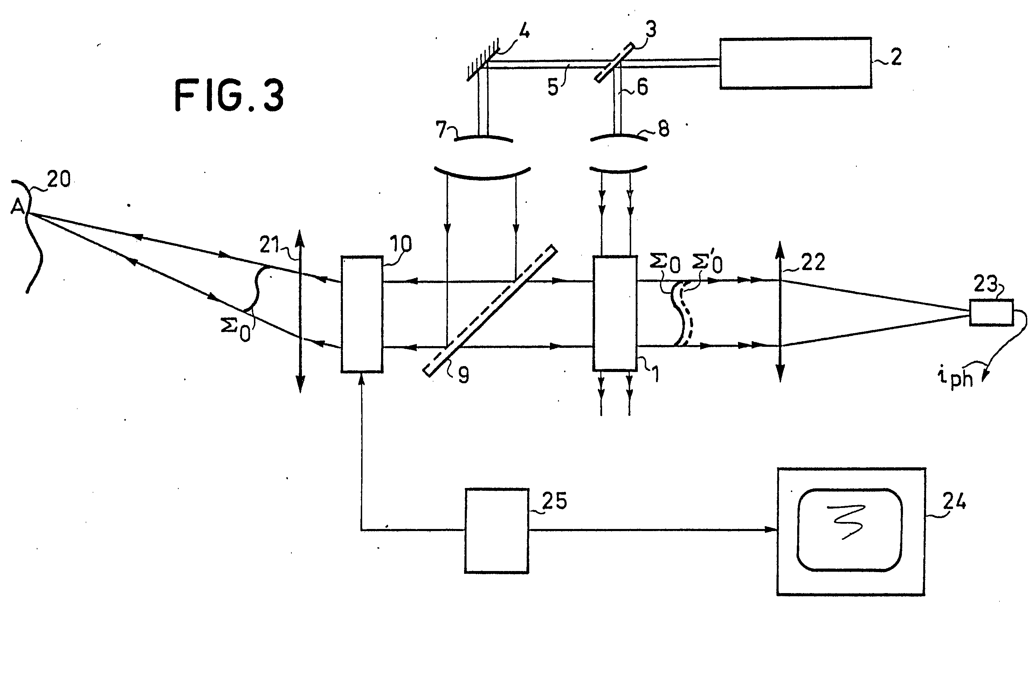

Une première réalisation de ce système est schématisée sur la fig. 3. Un laser 2 envoie un faisceau parallèle de lumière cohérente sur la lame semi-réfléchissante 3 qui le divise en un faisceau d'éclairage 5 de l'objet 20, et un faisceau de pompage 6. Le faisceau d'éclairage de l'objet est dévié par le miroir 4 sur un élargisseur de faisceau 7, y subit un élargissement et arrive sur une lame semi-réfléchissante 9 qui l'envoie sur un déviateur X–Y 10, comprenant un composant conventionnel tel qu'un miroir galvanométrique ou une cuve acousto-optique. Il est alors repris par une optique de focalisation 21, dont le plan focal est sensiblement sur l'objet 20 à détecter, et à un instant donné, le faisceau d'éclairage éclaire un point A de l'objet.

Ce point réémet de la lumière constituant un faisceau qui, par retour inverse, retraverse l'optique 21 et le déviateur 10 qui le recentre sur l'axe optique du système. Ce faisceau émergeant de l'objet traverse la lame semi-transparente 9 et arrive sur le milieu d'interaction 1.

Le faisceau de pompage 6, réfléchi par la lame semi-réfléchissante 3 est élargi au moyen de l'élargisseur de faisceau 8 et arrive sur le milieu d'interaction 1. Dans ce milieu, l'interaction du faisceau objet et du faisceau de pompage induit un réseau de strates. Une fraction de l'énergie de l'onde de pompe est diffractée sous la forme d'une

onde émergente $\Sigma'_0$ avec des caractéristiques isomorphes de celles de l'onde objet $\Sigma_0$ qui émerge du milieu 1, inchangée. Tout se passe comme si l'onde $\Sigma_0$ était amplifiée. Le faisceau à détecter, contenant l'énergie de $\Sigma_0$ et $\Sigma'_0$ est focalisé sur le détecteur 23 placé dans le plan focal d'une optique collectrice 22. Le signal détecté est visualisé sur un écran de visualisation type télévision 24 dont le balayage est synchrone du déviateur XY. Pour assurer ce synchronisme, c'est le même oscillateur XY, 25, qui commande le balayage de l'écran et du déviateur. On obtient sur l'écran une image bidimensionnelle de l'objet 20.

Pour que ce dispositif fonctionne dans de bonnes conditions, il faut s'assurer que le temps d'exploration d'un élément de l'objet ne soit pas négligeable par rapport à la constante de temps $\tau$ du milieu d'interaction 1.

Si, dans le plan du détecteur, on intègre N balayages de l'objet, le gain sur le rapport signal à bruit est proportionnel à $\sqrt{N}$. Dans ces conditions, les effets du «speckle» dû à la lumière cohérente sont réduits, et on obtient une image dont la qualité se rapproche de celle d'un éclairage incohérent.

Une caractéristique importante de ce système le rend apte à une détection hétérodyne. C'est le maintien de l'isomorphisme de l'onde réplique $\Sigma'_0$ avec l'onde objet lorsque l'on utilise deux ondes de pompes aux fréquences $\omega_0$ et $\omega_1 = \omega_0 + \Delta\omega$.

Pour une détection hétérodyne, on fait interférer sur un détecteur quadratique l'onde à détecter et une onde provenant d'un oscillateur local, qui est légèrement décalée en fréquence. Le rapport signal à bruit est amélioré par rapport à une détection homodyne telle que décrite ci-dessus.

Dans le système selon l'invention, on fait jouer à l'onde réplique $\Sigma'_0$ le rôle de l'onde provenant de l'oscillateur local. Cette onde $\Sigma'_0$ est parfaitement isomorphe de l'onde objet à détecter pour tous les points du front d'onde, quelle qu'en soit sa forme.

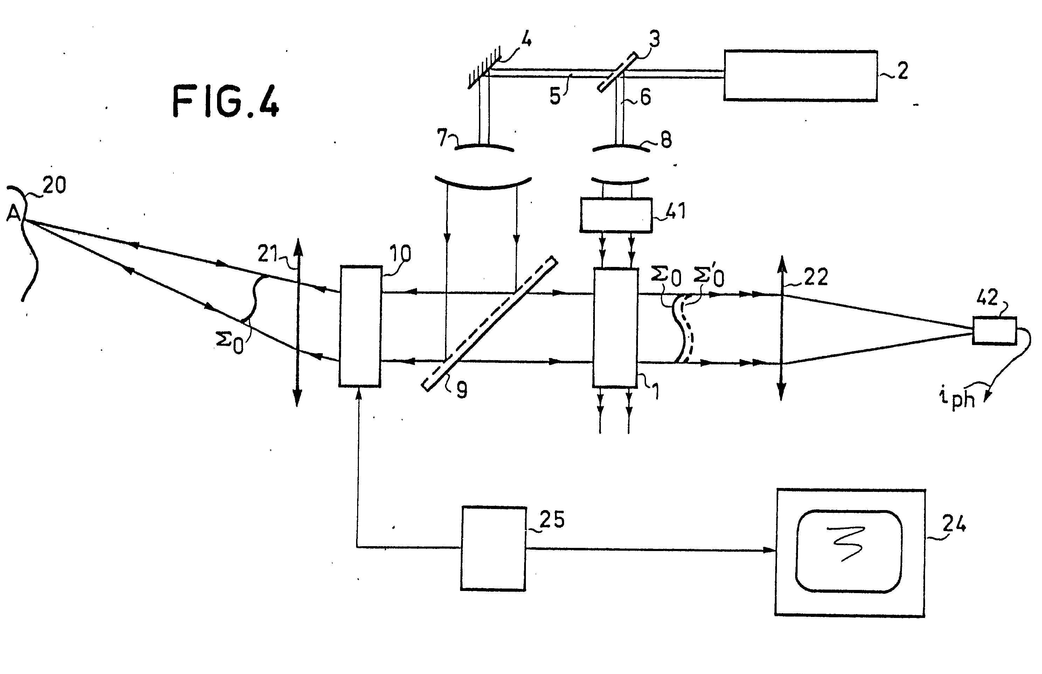

L'adaptation du système précédemment décrit à l'aide de la fig. 3 à une détection hétérodyne se fait en ajoutant des moyens permettant de générer les deux ondes pompes aux fréquences $\omega_0$ et $\omega_1$ = $\omega_0 + \Delta\omega$. Un tel système d'observation avec détection hétérodyne est représenté sur la fig. 4. On y retrouve les principaux éléments du système de la fig. 3, et en particulier, la source cohérente 2 qui fournit le faisceau 5 d'éclairage de l'objet 20 et le faisceau de pompe 6, les élargisseurs de faisceau 7 et 8, la lame semi-transparente 9 qui envoie vers l'objet 20 le faisceau d'éclairage dévié par le déviateur 10 et concentré par l'optique 21. Par retour inverse, le faisceau diffracté par le point éclairé de l'objet à un instant donné, retraverse le déviateur qui le centre sur l'axe optique du système, et arrive dans le milieu d'interaction 1. Dans cet exemple, c'est le faisceau de pompage 6 qui est décalé en fréquence par le dispositif 41, ici une cuve acousto-optique, interposé entre l'élargisseur de faisceau 8 et le milieu d'interaction 1.

A la condition que le décalage en fréquence entre les deux ondes n'induisent pas de variations d'éclairement plus rapides que le temps d'inscription du milieu 1, l'interférence de ces deux ondes dans ce milieu inscrit un réseau de strates qui provoque la diffraction d'un faisceau de front d'onde $\Sigma'_0$, réplique de $\Sigma_0$. Ces deux ondes $\Sigma'_0$ et $\Sigma_0$, légèrement décalées en fréquence viennent alors interférer, par l'intermédiaire de l'optique 22, sur le détecteur quadratique 42, où le signal est analysé autour de la fréquence différence entre les deux ondes. Ce détecteur génère un signal électrique $i_{ph}$ visualisé sur l'écran type télévision 24 balayé en synchronisme avec le déviateur 10 à l'aide de l'oscillateur 25. On obtient ainsi, sur l'écran, une image bidimensionnelle de l'objet.

Dans les exemples de réalisation du système d'observation qui ont été décrits à l'aide des figs 3 et 4, on diffracte seulement une partie de l'énergie de l'onde de pompe, celle qui est diffractée directement par le réseau de strates induit dans le milieu d'interaction 1. Une autre partie de l'énergie de ce faisceau traverse ce milieu, sans subir de diffraction, c'est le faisceau représenté en 15 sur la fig. 1. Comme expliqué à l'aide de cette figure, on peut renvoyer ce faisceau vers le milieu d'interaction à l'aide d'un miroir. Dans le milieu, cette énergie de pompage en retour est diffractée par le réseau de strates en formant un front d'onde conjugué du front d'onde provenant de l'objet. Le front d'onde conjugué émerge du milieu et se propage dans la direction d'où provient l'onde objet, étant en chaque point de sa trajectoire isomorphe du front d'onde objet en ce point. Par retour inverse, cette onde conjuguée retourne donc vers l'objet et renforce l'éclairement du point A d'où provenait l'onde objet ayant servi à la générer, ce qui rend ce point plus lumineux, et peut permettre dans certains cas, une observation détaillée de ce point, avec arrêt du balayage sur ce point, et analyse par un détecteur composite. Cette onde conjuguée est par ailleurs diffractée par l'objet, au moins en partie, dans la direction de cheminement de l'onde objet initiale et contribue à la renforcer.

Ceci constitue en quelque sorte une récupération d'énergie, que l'on peut mettre à profit pour gagner encore sur l'amplification du signal à détecter.

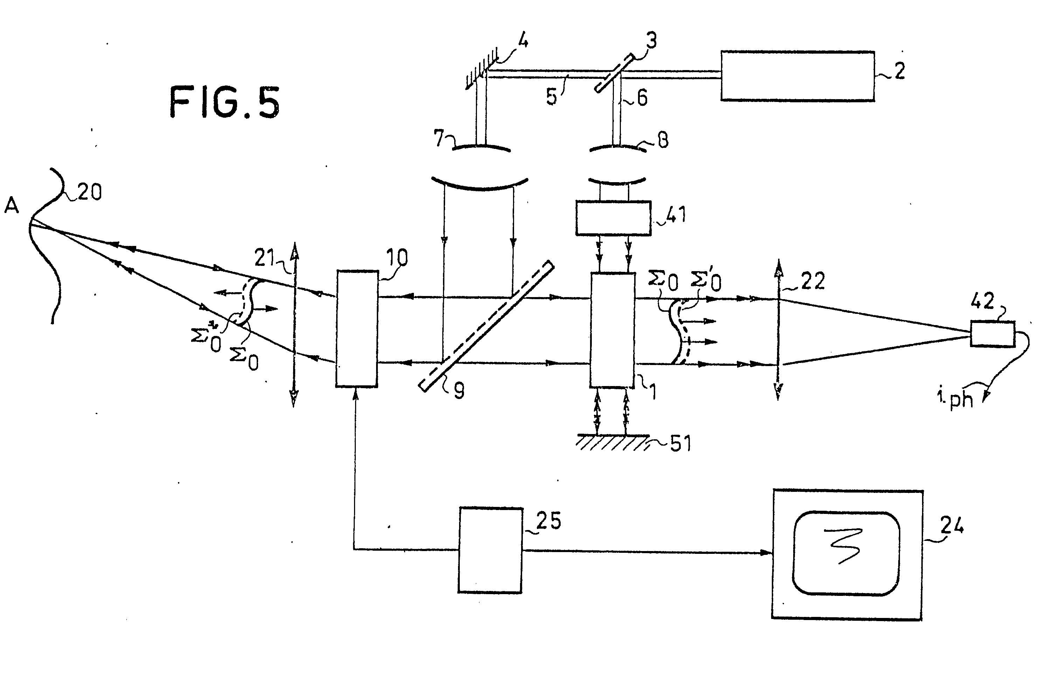

Un exemple de réalisation du système mettant à profit cette récupération est représenté sur la fig. 5. Cet exemple concerne un système d'observation avec détection hétérodyne.

Comme dans les exemples précédents, un laser 2 fournit l'énergie optique totale du système. Il émet un faisceau parallèle séparé en un faisceau 5 d'éclairage de l'objet et un faisceau de pompage 6, par la lame semi-transparente 3. Le faisceau d'éclairage de l'objet, dévié par le miroir 4 et élargi par l'élargisseur de faisceau 7 est envoyé sur le déviateur 10 par l'intermédiaire de la lame semi-transparente 9.

Focalisé par l'optique 21 dont le plan focal se situe sensiblement sur l'objet 20, qui n'est pas nécessairement plan, il éclaire, à un instant donné un point A, ou une petite région autour de A, selon la forme de l'objet en ce point. A l'instant représenté sur la fig. 5, le point éclairé se trouve dans un creux de l'objet et le faisceau 5 éclaire une petite portion de ce creux. Le point éclairé, ou la petite zone éclairée, réémet un rayonnement dont au moins une partie, par retour inverse retraverse l'optique 21, le déviateur 10 et arrive, selon l'axe du système optique, sur le milieu d'interaction 1, avec un front d'onde $\Sigma_0$ dépendant de la forme du «point» éclairé et éventuellement des inhomogénéités d'indice du milieu traversé.

Le faisceau de pompage 6, élargi par l'élargisseur 8 traverse la cuve acousto-optique 41 et arrive également dans le milieu 1.

Les deux faisceaux, objet et pompe interagissent, au moins partiellement, dans ce milieu et induisent un réseau de strates qui diffracte une partie du faisceau de pompage selon une onde de front d'onde $\Sigma'_0$, replique de $\Sigma_0$, dans le sens de propagation de $\Sigma_0$. Comme dans l'exemple représenté sur la fig. 4, $\Sigma'_0$ joue le rôle d'onde générée par l'oscillateur local pour la détection hétérodyne de l'objet. Les deux ondes $\Sigma_0$ et $\Sigma'_0$ interfèrent sur le détecteur 42, où elles sont focalisées par la lentille 22.

Le détecteur qui avantageusement analyse le signal autour de la fréquence différence des deux ondes génère un signal $i_{ph}$ qui est visualisé sur l'écran type télévision 24, dont le balayage est synchrone du déviateur XY 10; le synchronisme des balayages est obtenu en les commandant par le même oscillateur 25.

Une autre partie du faisceau de pompage arrivant dans le milieu 1, le traverse sans être diffracté par le réseau de strates. On renvoie cette fraction de faisceau dans le milieu en interposant sur son trajet le miroir 51. Une partie en émerge selon une onde complexe, conjuguée de l'onde objet incidente, avec un front d'onde $\Sigma^*_0$. Cette onde $\Sigma^*_0$ se propage en sens inverse de $\Sigma_0$, et retourne donc vers l'objet, avec un front d'onde identique en chaque point de sa trajectoire au front d'onde $\Sigma_0$ provenant de l'objet, et subissant éventuellement en sens inverse, toutes les déformations subies par $\Sigma_0$. Cette onde conjuguée $\Sigma^*_0$ arrive donc sur l'objet, au «point» d'où provient $\Sigma_0$, et apporte un supplément d'éclairage à ce «point», supplément qui peut être très substantiel, compte tenu que cette onde conjuguée, selon l'efficacité de l'interaction peut être beaucoup plus intense que l'onde objet proprement dite.

Ce renfort d'éclairage peut permettre une observation directe, par exemple à l'œil, de l'objet entier, d'une partie ou d'un point de l'objet, selon l'amplitude du balayage qui peut, justement être arrêté pour voir un point précis de l'objet.

Ce complément de rayonnement repart aussi, au moins en partie, en direction du système de détection, et contribue à renforcer l'onde objet $\Sigma_0$.

## Revendications

1. Système optique d'observation en temps réel d'un objet comprenant une source de rayonnement (2), cohérente, fournissant un faisceau concentré (5) d'énergie rayonnante éclairant un objet (20), ainsi qu'un faisceau de pompage (6), et un milieu d'interaction (1), le faisceau ($\Sigma_0$) réémis par l'objet (20) et le faisceau de pompage (6) interférant dans ce milieu d'interaction (1) dans lequel la modulation spatiale d'intensité lumineuse résultant des franges d'interférence induit une modulation spatiale de l'indice de réfraction, le réseau de strates ainsi photoinduites diffractant dans le sens de propagation du front d'onde ($\Sigma_0$) réémis par l'objet une fraction du faisceau de pompage sous la forme d'un front d'onde ($\Sigma'_0$) isomorphe du front d'onde objet ($\Sigma_0$), l'onde réémise par l'objet se trouvant donc amplifiée à la sortie dudit milieu d'interaction (1), caractérisé en ce qu'il comprend en outre un dispositif déviateur (10) qui assure le balayage de l'objet au moyen du faisceau concentré (5), l'onde réémise par l'objet (20) étant transmise par un retour inverse via le dispositif déviateur (10) pour aller interférer dans ce milieu (1), des moyens changeurs de fréquence disposés sur le trajet du faisceau de pompage, en amont du milieu d'interaction, provoquant en sortie dudit milieu (1) l'émergence d'une onde diffractée ($\Sigma'_0$) décalée en fréquence par rapport à l'onde objet ($\Sigma_0$) émergeant dudit milieu (1), un détecteur ponctuel (42) situé sur le trajet des ondes objet ($\Sigma_0$) et diffractée ($\Sigma'_0$) émergeant dudit milieu (1), pour effectuer une détection hétérodyne autour de la fréquence différence entre ces deux ondes, et des moyens de visualisation à balayage reliés audit détecteur dont le balayage est en synchronisme avec le balayage de cet objet (20) pour produire une image dudit objet à partir des signaux fournis par ledit détecteur (42).

2. Système selon la revendication 1, caractérisé en ce qu'il comprend en outre un miroir (51) pour renvoyer vers le milieu d'interaction (1) la fraction du rayonnement de pompage (6) qui l'a traversé sans être diffracté, le miroir (51) étant normal au trajet de cette fraction de rayonnement; l'onde complexe conjuguée de l'onde objet ainsi générée produisant un supplément d'éclairage de l'objet.

3. Système selon la revendication 1, caractérisé en ce qu'il comprend un détecteur composite, et les moyens permettant de commander l'arrêt du balayage pour éclairer un point déterminé dont on veut faire l'analyse détaillée.

## Claims

1. Optical observation system in real time of an object comprising a coherent irradiation source (2), supplying a concentrated beam (5) of radiating energy illuminating an object (20), as well as a pumping beam (6), and an interaction medium (1), the beam ($\Sigma_0$) reemitted by the object (20) and the pumping beam (6) interfering in this interaction medium (1) in which the luminous intensity spatial modulation resulting from the disturbance fringes induces a spatial modulation of the refraction index, the thus photoinduced layer network diffracting in the propagation direction of the wave front

($\Sigma_0$) reemitted by the object a fraction of the pumping beam in the form of an isomorphous wave front ($\Sigma_0$) of the object wave front ($\Sigma_0$), the wave reemitted by the object thus being amplified at the output of the said interaction medium, characterized in that it comprises, furthermore, a deflection device (10) that ensures the sweeping of the object by means of the concentrated beam (5), the beam reemitted by the object (20) being transmitted by an inverted return via the deflection device (10) to interfere in this medium (1), frequency changer means disposed on the path of the pumping beam, upstream of the interaction medium, provoking at the output of the said medium (1) the emergence of a diffracted wave ($\Sigma_0$) shifted in frequency with respect to the object wave emerging from the said medium (1), a punctual detector (42) situated on the path of the object ($\Sigma_0$) and diffracted ($\Sigma_0$) waves emerging from the said medium (1), in order to effect a heterodyne detection about the difference frequency between these two waves, and sweeping visualation means connected to the said detector of which the sweeping is in synchronism with the sweeping of this object (20) in order to produce from the signals supplied by the said detector (42) an image of the said object.

2. System according to claim 1, characterized in that it comprises furthermore a mirror (51) to send back towards the interaction medium (1) the fraction of the pumping radiation (6) that through-crossed it without being diffracted, the mirror (51) being normal to the path of this radiation fraction; the conjugated complex wave of the object wave thus generated producing additional illumination of the object.

3. System according to claim 1, characterized in that it comprises a composite detector, and means allowing to control the interruption of the sweeping in order to illuminate a determined point of which it is required to make a detailed analysis.

**Patentansprüche**

1. Optisches System zur Beobachtung eines Gegenstandes in Echtzeit, welches eine kohärente Strahlenquelle (2) enthält, die ein konzentriertes Strahlungsenergie-Lichtbündel (5) liefert, das einen Gegenstand (20) beleuchtet, sowie ein Pumpenlichtbündel (6), und einen Interaktionsbereich (1), wobei das von dem Gegenstand (20) zurückgeworfene Lichtbündel ($\Sigma_0$) und das Pumpenlichtbündel (6) in diesem Interaktionsbereich (1) sich überlagern, in dem die aus den Interferenzstreifen resultierende Raummodulation der Leuchtintensität eine Raummodulation des Brechungsindex bewirkt, wobei das Netz der so photoinduzierten Schichten einen Teil des Pumpenlichtbündels in der Form einer isomorphen Wellenfront ($\Sigma_0$) beugt, die von dem Gegenstand zurückgeworfene Wellenfront sich dabei am Ausgang des Interaktionsbereichs (1) verstärkt findet, dadurch gekennzeichnet, dass es zudem eine das Abtasten des Gegenstandes durch das konzentrierte Lichtbündel (5) gewährleistende Ablenkvorrichtung (10) enthält, wobei die von dem Gegenstand (20) zurückgeworfene Welle durch eine umgekehrte Rückkehr über die Ablenkvorrichtung (10) übertragen wird, um in diesem Bereich (1) zu interferieren, auf der Strecke des Pumpenbündels oberhalb des Interaktionsbereichs Frequenzumsetzermittel, welche am Ausgang des Bereichs (1) den Austritt einer gebeugten, im Verhältnis zu der aus dem Bereich (1) austretenden Gegenstandswelle ($\Sigma_0$) frequenzverschobenen Welle ($\Sigma'_0$) hervorrufen, angebracht sind, ein punktförmiger Detektor (42) auf der Strecke der aus dem Bereich (1) austretenden Gegenstandswelle ($\Sigma_0$) und der gebeugten Welle ($\Sigma'_0$) zur Durchführung einer heterodynen Detektion um die Differenz der Frequenz zwischen diesen beiden Wellen sich befindet, und Sichtbarmachungsmittel durch Abtastung, die mit dem Detektor verbunden sind, dessen Abtastung im Synchronismus mit der Abtastung dieses Gegenstands (20) ist, um ein Bild des Gegenstands, ausgehend von den von dem Detektor (42) gelieferten Signalen, zu erzeugen.

2. System nach Anspruch 1, dadurch gekennzeichnet, dass es zudem einen Spiegel (51) umfasst, um den Teil der Pumpenstrahlung (6) zur Interaktionsmitte zurückzuwerfen, der sie durchquert hat ohne gebrochen zu sein, wobei der Spiegel (51) normalerweise sich auf der Strecke dieses Strahlenteils befindet; die komplexe, mit der so erzeugten Gegenstandswelle konjugierte Welle schafft dabei eine zusätzliche Beleuchtung des Gegenstands.

3. System nach Anspruch 1, dadurch gekennzeichnet, dass es einen zusammengesetzten Detektor enthält und die Mittel zur Steuerung der Abtastunterbrechung, um einen bestimmten Punkt zu beleuchten, von dem man eine detaillierte Analyse machen möchte.

# FIG.1

$\Sigma Pi$

13

$\Sigma_i^*$ $\Sigma_0$      $\Sigma_0$ $\Sigma_i'$

12     1   11     14

15

16

# FIG.2

$I(\Sigma_0)$

t          t'    temps

$I(\Sigma_i')$
$I(\Sigma_i^*)$

t   t+$\tau$      t'    temps

# FIG.3

FIG.4

FIG.5

0 040 114